# EUROPEAN PATENT SPECIFICATION

(11) **EP 4 024 618 B1**
(45) Date of publication and mention of the grant of the patent: **01.07.2026**
(21) Application number: 21305004.0
(22) Date of filing: 04.01.2021
(51) Int. Cl.: H01R 4/20

(54) **SUBSEA POWER CABLE WITH TENSION AND CONTINUITY JOINT**
UNTERWASSERSTROMKABEL MIT ZUG- UND DAUERVERBINDUNG
CÂBLE ÉLECTRIQUE SOUS-MARIN DOTÉ D'UN JOINT DE TENSION ET DE CONTINUITÉ

(43) Date of publication of application: 06.07.2022
(73) Proprietor: Nexans, 92400 Courbevoie (FR)
(72) Inventor: IVERSEN, Oyvind, 1406 SKI (NO); KALHEIM, Bjorn Willy, 0880 OSLO (NO)
(74) Representative: Acapo Onsagers AS

(56) References cited:
- CN-U- 208 142 352
- DE-B- 1 072 671
- JP-A- H 099 447
- JP-A- H0 318 210
- US-A1- 2015 075 864
- US-A1- 2015 200 513

## Description

The present invention relates to a subsea power cable, especially a subsea power cable with a joint. As well as a method for providing such a joint.

### Background

Joining of conductors and power cables may be required both during production and repair of power cables.

Subsea power cables have a more complex design than overhead lines in that the conductors are surrounded by electrical insulation such as XLPE (cross linked polyethylene) or mass impregnated insulation system. They include elements to handle the subsea environment and elements providing the necessary yield strength to deploy the cable subsea.

For underground cables - there are limited requirements to mechanical tension properties. These limited requirements are ensured by relying on armour arranged external to the conductor. A conductor joint by welding has reduced mechanical properties compared to the unwelded conductor and is often not sufficiently strong for subsea applications.

A joint on a subsea cable, especially for power cables without armour arranged external of the conductor, will need to be able to withhold the mechanical tension similar as the force set up when the conductor in the subsea cable is approaching its yield strength and limit.

Power cables for direct electrical heating (DEH) cannot include metallic/conducting armour external of the conductor as this would have a negative effect on the function of the cable when it is arranged on a pipeline to providing heating of said pipeline. For DEH cables there is a particular need to provide a conductor joint which has a tensional strength and electrical conductivity similar to the conductor.

If the conductor in it self does not have sufficient tensile strength a tensile strength element can be included in side the conductor.

### Prior art

DE1072671 discloses a compression sleeve comprising two concentric layers, where the inner layer provides the electrical connection and the outer layer the tensional strength. The sleeve is compressed with a tool not providing a circular circumference but a circumference with two circle sections and two extending flanges. Both JPH0318210A and CN208142352U disclose a method for connecting overhead distribution lines using a compressed sleeve.

### Objectives of the invention

The aim of the present invention is to provide a solution for joining a subsea power cable that provides for both an electrical and mechanical connection without relying on external armouring.

An objective of the present invention is to be able to joint/splice a subsea cable such that the jointed cable has high mechanical tension properties without necessarily using external armour.

It is the objection to provide a joint that can be made both offshore also during repair and in a factory.

A further aim is to provide a solution for joining conductors comprising a tension element included therein.

The present invention provides a subsea power cable comprising a joint, wherein a first conductor end comprising a first tension element is electrically and mechanically connected to a second conductor end with a second tension element, wherein the joint comprises a compression ferrule with a longitudinal aperture, wherein the compression ferrule comprises at least two compression zones that have been compressed respectively onto the first conductor end and the second conductor end inserted into the aperture of the compression ferrule from opposite sides.

The first and second conductor may comprise one or more tension elements. In one embodiment the tension element is a central tension element arranged in the centre of the conductors

The tension element could be made of steel, like a steel rod or wire, or the tension element could be made of fibres such as glass or carbon fibres.

In one embodiment of the power cable the first tension element and the second tension element are in contact within the aperture. Preferably, the first tension element and the second tension element are mechanically connected within the aperture by welding, by compression, and/or by a second compression ferrule.

In an embodiment of the power cable the first tension element and the second tension element within the aperture are surrounded by a filler material. Preferably, the filler material is selected from metal in the second compression ferrule, welding metal, and/or a semi-conducting polymer.

In a further embodiment of the power cable the compression ferrule has a wall thickness prior to compression equivalent to 5-50% of the diameter of the aperture, preferably 15-30%, more preferably 20-25%.

A typical high voltage power cable conductor has a cross-sectional area of 240,300,400,500,630,800,1000,1200,1400,1600,1800, or 2000 mm². Typical conductor cross sections for DEH cables are 630, 800, 1000, 1200, 1400 or 1600 mm². The ferrule can be designed with an aperture adapted to receive any one of such conductors. The ferrule is to be designed such that the aperture is adapted to have a diameter that exceeds the diameter of the conductor to be connected only enough to allow for the conductor to be inserted into the aperture. In this way the diameter of the aperture is adapted to be 0.2 - 5 mm larger than diameter of the conductor to be inserted into it, preferably 1-3 mm, more preferably 1-2 mm. Power cable according to any one of the proceeding claims, wherein the first conductor end and the second conductor end have different diameters and the compression ferrule is asymmetric with different aperture diameters at opposite sides prior to compression. When the compression ferrule is asymmetric the radial wall thickness on a first side is equivalent to 10-50% of the diameter of the aperture on the first side, preferably 15-30%, more preferably 20-25%. Similarly, the radial wall thickness on a second side is equivalent to 10-50% of the diameter of the aperture on the second side, preferably 15-30%, more preferably 20-25%.

In a further embodiment the compression ferrule comprises more than two, such as four, six or eight compression zones that have been compressed respectively onto the first conductor end and the second conductor end. In one embodiment one or more of the compression zones that have been compressed have a polygonal shaped radial circumference, preferably a hexagonal or octagonal shaped radial circumference. The polygonal shaped compression provides increased joining strength. Preferably all compression zones are compressed to have similar polygonal circumference. The compression zones are sections in the longitudinal direction of the compression ferrule that are compressed when the ferrule is installed. The compression zones are separated by sections that are not compressed when the ferrule is installed.

Further, according to the invention the power cable the joint including the compressed ferrule is enclosed in an inner semi-conducting layer, enclosed in an insulation layer, enclosed in an outer semi-conducting layer. Optionally one or more additional external sheaths may be provided.

In one embodiment the compression ferrule prior to compression comprises an internal surface provided with corrugations such as threads. The corrugations serve to further improve the tensile strength of the connection between the ferrule and a conductor end and the electrical connection therebetween

In a further embodiment the compression ferrule comprises an internal flange in proximity of the longitudinal centre of the ferrule.

The compression ferrule can be made of copper or a copper alloy.

The present invention further provides a method of providing a joint on a subsea power cable wherein a first conductor end comprising a first tension element is electrically and mechanically connected to a second conductor end with a second tension element, comprising
- removing any semi-conducting or insulating layers from an end section of the first conductor end and the second conductor end
- providing a compression ferrule with a longitudinal aperture, wherein the compression ferrule comprises at least two compression zones
- inserting the first conductor end and the second conductor end into the aperture of the compression ferrule from opposite sides;
- compressing the compression ferrule onto the first conductor end and the second conductor end in the at least two compression zones, such that the first conductor end and the second conductor end are electrically and mechanically connected.
- the joint including the compressed ferrule is enclosed in an inner semi-conducting layer, enclosed in an insulation layer, and then enclosed in an outer semi-conducting layer.

In one embodiment of the method according to the invention,
removing any semi-conducting or insulating layers from an end section of the first conductor end comprises removing any semi-conducting or insulating layers for a length extending the length of the aperture,
and inserting the first conductor end and the second conductor end into the aperture of the compression ferrule from opposite sides comprises:
   - arranging the compression ferrule surrounding the length of the first conductor end
   - connecting the first tension element to the second tension element by welding or by compressing the tensions elements, or attaching a second compression ferrule to the first tension element and to the second tension element, and
   - sliding the compression ferrule towards and onto the second conductor end

The method includes connecting the first and second tension elements to each other. When they are welded together the ends are preferably cut at an angle providing a V-shaped grove between the ends of the tension elements that is filed with welding material. Additional welding material may be provided to increase the diameter to be similar to the diameters of the respective conductors, thus filling the gap there between with welding material, alternatively or additionally a semi-conducting polymer may be used to fill any gaps and provide the section including the joint tension elements with the same diameter as the conductors. If a second compression ferrule is compressed to the ends of the tension elements to connect these to each other any gaps are similarly filed with welding material and/or semi-conducting polymer to and provide the section including the joint tension elements with the same diameter as the conductors.

The term "ferrule" as applied here refers to a sleeve element with a throughgoing longitudinal aperture.

### Brief description of the drawings

The present invention will be discussed in further detail with reference to the enclosed drawings, that are provided as illustrations of embodiments thereof.
Figure 1a shows a side view of a power cable and a compression ferrule prior to positioning of the compression ferrule over the joint tension elements.
Figure 1b illustrates side view of a power cable and a ferrule prior to compression of the compression ferrule.
Figure 2 illustrates a cross-sectional view of a conductor with a tension element.
Figure 3 illustrates a side view of a power cable.
Figure 4a shows a side view of a compression ferrule prior to installation.
Figure 4b illustrates the longitudinal cross-sectional view along A-A of figure 4a.
Figure 5 illustrates a further embodiment of the ferrule.

### Principal description of the invention

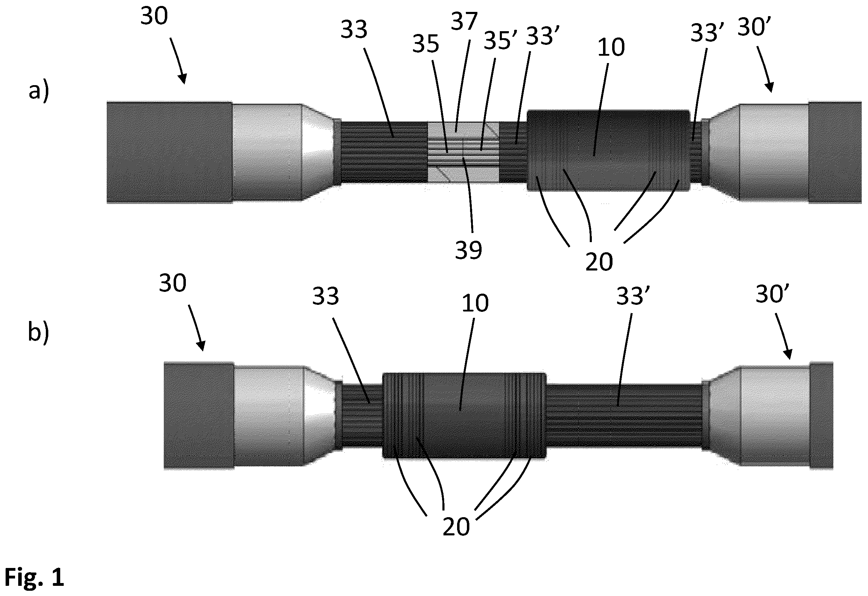

The present invention will be discussed in further detail with reference to the enclosed figures. Figures 1a and 1b illustrates the joining of to power cable ends 30, 30', where figure 1a illustrates the situation just before the ferrule 10 is arranged over the joint central tension elements 35,35'and figure 1b illustrates the situation after the compression ferrule has been arranged over the joint central tension elements but before the compression of the compression ferrule to connect the ferrule to the conductors 33 and 33'.

As illustrated on figure 1a the compression ferrule 10 is arranged on a section of the conductor 33' of a first cable end 30'. The section is longer than the length of the aperture of the ferrule such that the ferrule can be arranged on the first conductor 33' while the tension elements 35 and 35' are connected. The connection 39 is illustrated as straight line in the embodiment shown on the figure, however as discussed above different other connections methods may be used to connect the tension elements. The gap between the conductor ends and the connected tension elements are filled with a filler material 37 which can include a second compression ferrule, welding metal and/or a semi-conducting polymer.

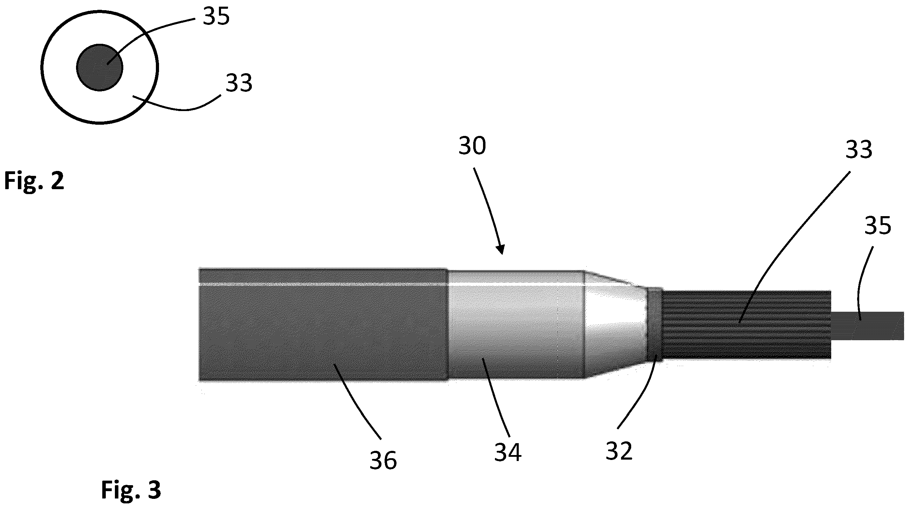

On figure 1b the ferrule 10 has been slid sideways such that the ferrule 10 surrounds the joint between the tension elements and the compression zones 20 indicated on the surface of the ferrule are arranged over the conductors 33 and 33' respectively. To complete the joint the ferrule would be compressed onto a first conductor end and the ferrule would be compressed onto a second conductor end. If the ferrule comprises additional compression zones additional compression of the ferrule is performed, preferably the first compressions are preformed closest to the centre of the ferrule and alternating between the two conductor ends. The compression tool would preferably compress substantially the full circumference of the compression zone such that any surplus material is moved sideways into the zones not dedicated as compression zones. After the compression of the ferrule the rebuilding of the semi-conducting and insulating layers around the joint would take place. First a inner semi conducting layer would be applied connecting to the semi-conducting layer of the first and second cable end 30, 30'. Then a layer of insulation would be applied before the outer semi-conducting layer connecting to the outer semi-conducting layers of the first and second cable end 30, 30' is applied. Figure 2 illustrates a cross-sectional view of the conductor 33 with a central tension element 35. Figure 3 illustrate the end of a power cable prior to connection to the ferrule. The power cable 30 comprises a conductor 33 with a central tension element 35, in the end section to be inserted into the aperture of the ferrule the layers surrounding the conductor have been removed. These layers comprise an inner semi-conducting layer 32, surrounded by an insulation layer 34 and an outer semi-conducting layer 36. From an end section of the central tension element 35 the conductor 33 has been removed.

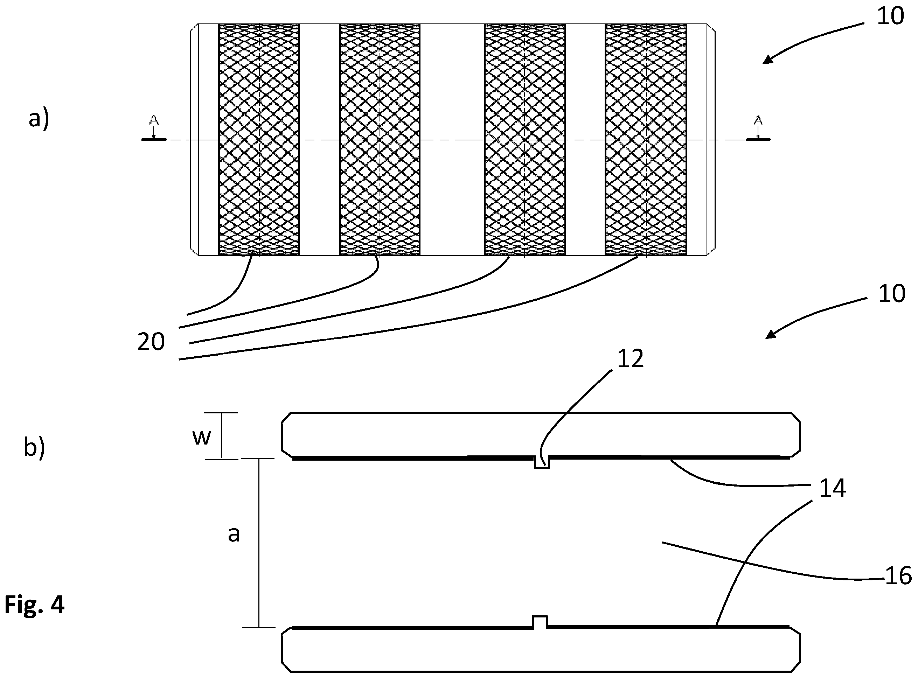

Figure 4a and 4b show respectively aside view and a cross sectional view of a ferrule 10 according to the present invention. On figure 4a the compression zones 20 are marked up. The marking is made to assist the installation of the ferrule and the application of the compression force in the intended areas. The placement of the compression zones can also be measured out when there are not marked up on the ferrule. The marking of the compression zones can as in the illustrated embodiment be done by surface alterations but other alternatives such as colour markings or markings with tape or similar temporarily or permanently added material. In the illustrated embodiment two compression zones are arranged on either side of the ferrule for compression onto a conductor end to be inserted on either side thereof. Additional features of the ferrule 10 are illustrated in the cross-sectional view in figure 4b. The ferrule has a longitudinal aperture 16 with a diameter "a". The wall thickness is w. The internal surface 14 of the wall of the ferrule may comprise corrugations such as threads or small ribs that serve to increase the strength of the connection between the compressed ferrule and the conductor end.

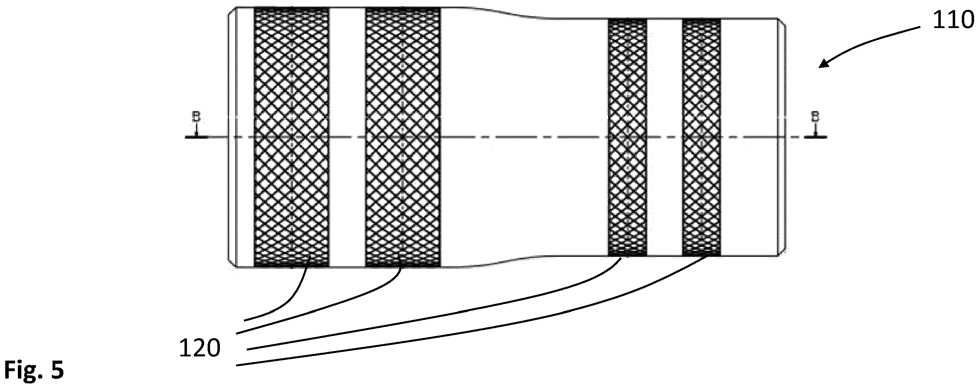

Figure 5 illustrates an asymmetric ferrule 110 with four compression zones 120. The ferrule is for joining two conductors of different cross-section and diameter in that the aperture on the left side is larger than the aperture on the right side, and each adapted to have a diameter that exceeds the diameter of the conductor to be connected only enough to allow for the conductor to be inserted into the aperture.

## Claims

1. Subsea power cable comprising a joint, wherein a first conductor end (33) comprising a first tension element (35) is electrically and mechanically connected to a second conductor end (33') with a second tension element (35'), **characterised in that** the joint comprises a compression ferrule (10) with a longitudinal aperture, wherein the compression ferrule comprises at least two compression zones (20) that have been compressed respectively onto the first conductor end (33) and the second conductor end (33') inserted into the aperture of the compression ferrule from opposite sides, the joint including the compressed ferrule being enclosed in an inner semi-conducting layer, enclosed in an insulation layer, enclosed in an outer semi-conducting layer.

2. Subsea power cable according to claim 1, wherein the first tension element (35) and the second tension element (35') are in contact within the aperture.

3. Subsea power cable according to claim 2, wherein the first tension element (35) and the second tension element (35') are mechanically connected within the aperture by welding, by compression, and/or by a second compression ferrule.

4. Subsea power cable according any one of the claims 1-3, wherein the first tension element (35) and the second tension element (35') within the aperture are surrounded by a filler material (37).

5. Subsea power cable according to claim 4, wherein the filler material (37) is selected from metal in the second compression ferrule, welding metal, and/or a semi-conducting polymer.

6. Subsea power cable according to any one of the proceeding claims, wherein the compression ferrule has a wall thickness (w) prior to compression equivalent to 5-50% of the diameter (a) of the aperture, preferably 15-30%, more preferably 20-25%.

7. Subsea power cable according to any one of the proceeding claims, wherein the first conductor end (33) and the second conductor end (33') have different diameters and the compression ferrule (110) is asymmetric with different aperture diameters (a) at opposite sides prior to compression.

8. Subsea power cable according to any one of the proceeding claims, wherein the compression ferrule comprises four or six compression zones (20) that have been compressed respectively onto the first conductor end (33) and the second conductor end (33').

9. Subsea power cable according to any one of the proceeding claims, wherein one or more of the compression zones (20) that have been compressed have a polygonal shaped radial circumference, preferably a hexagonal or octagonal shaped radial circumference.

10. Subsea power cable according to any one of the proceeding claims, wherein the compression ferrule (10) prior to compression comprises an internal surface (14) provided with corrugations such as threads.

11. Subsea power cable according to any one of the proceeding claims, wherein the compression ferrule (10) comprises an internal flange (12) in proximity of the longitudinal centre of the ferrule.

12. Subsea power cable according to any one of the proceeding claims, wherein the compression ferrule (10) is made of copper or a copper alloy.

13. Method of providing a joint on a subsea power cable wherein a first conductor end (33) comprising a first tension element (35) is electrically and mechanically connected to a second conductor end (33') with a second tension element (35'), comprising
- removing any semi-conducting or insulating layers from an end section of the first conductor end and the second conductor end
- providing a compression ferrule (10) with a longitudinal aperture, wherein the compression ferrule comprises at least two compression zones (20)
- inserting the first conductor end (33) and the second conductor end (33') into the aperture of the compression ferrule from opposite sides
- compressing the compression ferrule onto the first conductor end (33) and the second conductor end (33') in the at least two compression zones, such that the first conductor end (33) and the second conductor end (33') are electrically and mechanically connected;
- the joint including the compressed ferrule is enclosed in an inner semi-conducting layer, enclosed in an insulation layer, and then enclosed in an outer semi-conducting layer.

14. Method according to claim 13, wherein
removing any semi-conducting or insulating layers from an end section of the first conductor end comprises removing any semi-conducting or insulating layers for a length extending the length of the aperture,
wherein inserting the first conductor end (33) and the second conductor end (33') into the aperture of the compression ferrule from opposite sides comprises:
- arranging the compression ferrule surrounding the length of the first conductor end
- connecting the first tension element (35) to the second tension element (35') by welding or by compressing the tensions elements, or attaching a second compression ferrule to the first tension element (35) and to the second tension element (35'), and
- sliding the compression ferrule towards and onto the second conductor end.

## Patentansprüche

1. Unterwasserstromkabel, das eine Verbindung umfasst, wobei ein erstes Leiterende (33), das ein erstes Zugelement (35) umfasst, elektrisch und mechanisch mit einem zweiten Leiterende (33') mit einem zweiten Zugelement (35') verbunden ist, **dadurch gekennzeichnet, dass** die Verbindung eine Kompressionshülse (10) mit einer Längsöffnung umfasst, wobei die Kompressionshülse zumindest zwei Kompressionszonen (20) umfasst, die jeweils auf das erste Leiterende (33) und das zweite Leiterende (33') komprimiert worden sind, die in die Öffnung der Kompressionshülse von gegenüberliegenden Seiten eingeführt wurden, wobei die Verbindung, welche die komprimierte Hülse beinhaltet, in einer inneren halbleitenden Schicht eingeschlossen ist, in einer Isolationsschicht eingeschlossen ist, in einer äußeren halbleitenden Schicht eingeschlossen ist.

2. Unterwasserstromkabel nach Anspruch 1, wobei das erste Zugelement (35) und das zweite Zugelement (35') in Kontakt innerhalb der Öffnung sind.

3. Unterwasserstromkabel nach Anspruch 2, wobei das erste Zugelement (35) und das zweite Zugelement (35') innerhalb der Öffnung durch Schweißen, durch Kompression und/oder durch eine zweite Kompressionshülse mechanisch verbunden sind.

4. Unterwasserstromkabel nach einem der Ansprüche 1-3, wobei das erste Zugelement (35) und das zweite Zugelement (35') innerhalb der Öffnung durch ein Füllmaterial (37) umgeben sind.

5. Unterwasserstromkabel nach Anspruch 4, wobei das Füllmaterial (37) aus Metall in der zweiten Kompressionshülse, Schweißmetall und/oder einem halbleitenden Polymer ausgewählt ist.

6. Unterwasserstromkabel nach einem der vorhergehenden Ansprüche, wobei die Kompressionshülse eine Wanddicke (w) vor Kompression äquivalent zu 5-50 % des Durchmessers (a) der Öffnung, bevorzugt 15-30 %, bevorzugter 20-25 % aufweist.

7. Unterwasserstromkabel nach einem der vorhergehenden Ansprüche, wobei das erste Leiterende (33) und das zweite Leiterende (33') unterschiedliche Durchmesser aufweisen und die Kompressionshülse (110) asymmetrisch mit unterschiedlichen Öffnungsdurchmessern (a) an gegenüberliegenden Seiten vor Kompression ist.

8. Unterwasserstromkabel nach einem der vorhergehenden Ansprüche, wobei die Kompressionshülse vier oder sechs Kompressionszonen (20) umfasst, die jeweils auf das erste Leiterende (33) und das zweite Leiterende (33') komprimiert worden sind.

9. Unterwasserstromkabel nach einem der vorhergehenden Ansprüche, wobei eine oder mehrere der Kompressionszonen (20), die komprimiert worden sind, einen polygonal geformten radialen Umfang, bevorzugt einen sechseckig oder achteckig geformten radialen Umfang aufweisen.

10. Unterwasserstromkabel nach einem der vorhergehenden Ansprüche, wobei die Kompressionshülse (10) vor Kompression eine Innenfläche (14) umfasst, die mit Wellen wie Gewinden bereitgestellt ist.

11. Unterwasserstromkabel nach einem der vorhergehenden Ansprüche, wobei die Kompressionshülse (10) einen Innenflansch (12) in Nähe der Längsmitte der Hülse umfasst.

12. Unterwasserstromkabel nach einem der vorhergehenden Ansprüche, wobei die Kompressionshülse (10) aus Kupfer oder einer Kupferlegierung besteht.

13. Verfahren zum Bereitstellen einer Verbindung an einem Unterwasserstromkabel, wobei ein erstes Leiterende (33), das ein erstes Zugelement (35) umfasst, elektrisch und mechanisch mit einem zweiten Leiterende (33') mit einem zweiten Zugelement (35') verbunden wird, umfassend
- Entfernen von beliebigen halbleitenden oder isolierenden Schichten von einem Endabschnitt des ersten Leiterendes und des zweiten Leiterendes,
- Bereitstellen einer Kompressionshülse (10) mit einer Längsöffnung, wobei die Kompressionshülse zumindest zwei Kompressionszonen (20) umfasst,
- Einführen des ersten Leiterendes (33) und des zweiten Leiterendes (33') in die Öffnung der Kompressionshülse von gegenüberliegenden Seiten,
- Komprimieren der Kompressionshülse auf das erste Leiterende (33) und das zweite Leiterende (33') in den zumindest zwei Kompressionszonen, sodass das erste Leiterende (33) und das zweite Leiterende (33') elektrisch und mechanisch verbunden sind;
- wobei die Verbindung, welche die komprimierte Hülse beinhaltet, in einer inneren halbleitenden Schicht eingeschlossen ist, in einer Isolationsschicht eingeschlossen ist und dann in einer äußeren halbleitenden Schicht eingeschlossen ist.

14. Verfahren nach Anspruch 13, wobei
das Entfernen von beliebigen halbleitenden oder isolierenden Schichten von einem Endabschnitt des ersten Leiterendes Entfernen von beliebigen halbleitenden oder isolierenden Schichten für eine Länge, die sich über die Länge der Öffnung erstreckt, umfasst,
wobei das Einführen des ersten Leiterendes (33) und des zweiten Leiterendes (33') in die Öffnung der Kompressionshülse von gegenüberliegenden Seiten Folgendes umfasst:
- Anordnen der Kompressionshülse, welche die Länge des ersten Leiterendes umgibt,
- Verbinden des ersten Zugelements (35) mit dem zweiten Zugelement (35') durch Schweißen oder durch Komprimieren der Zugelemente oder Anbringen einer zweiten Kompressionshülse an dem ersten Zugelement (35) und an dem zweiten Zugelement (35') und
- Schieben der Kompressionshülse zu dem und auf das zweite Leiterende.

## Revendications

1. Câble d'alimentation sous-marin comprenant un joint, dans lequel une première extrémité de conducteur (33) comprenant un premier élément de tension (35) est électriquement et mécaniquement raccordée à une seconde extrémité de conducteur (33') dotée d'un second élément de tension (35'), **caractérisé en ce que** le joint comprend une virole de compression (10) dotée d'une ouverture longitudinale, dans lequel la virole de compression comprend au moins deux zones de compression (20) qui ont été comprimées respectivement sur la première extrémité de conducteur (33) et la seconde extrémité de conducteur (33') insérées dans l'ouverture de la virole de compression à partir de côtés opposés, le joint comprenant la virole comprimée étant enfermé dans une couche semi-conductrice interne, enfermé dans une couche isolante, enfermé dans une couche semi-conductrice externe.

2. Câble d'alimentation sous-marin selon la revendication 1, dans lequel le premier élément de tension (35) et le second élément de tension (35') sont en contact à l'intérieur de l'ouverture.

3. Câble d'alimentation sous-marin selon la revendication 2, dans lequel le premier élément de tension (35) et le second élément de tension (35') sont mécaniquement raccordés à l'intérieur de l'ouverture par soudage, par compression et/ou par une seconde virole de compression.

4. Câble d'alimentation sous-marin selon l'une quelconque des revendications 1 à 3, dans lequel le premier élément de tension (35) et le second élément de tension (35') à l'intérieur de l'ouverture sont entourés d'un matériau de remplissage (37).

5. Câble d'alimentation sous-marin selon la revendication 4, dans lequel le matériau de remplissage (37) est choisi parmi du métal dans la seconde virole de compression, du métal de soudure et/ou un polymère semi-conducteur.

6. Câble d'alimentation sous-marin selon l'une quelconque des revendications précédentes, dans lequel la virole de compression présente une épaisseur de paroi (w) avant la compression équivalente à 5 à 50 % du diamètre (a) de l'ouverture, de préférence 15 à 30 %, idéalement 20 à 25 %.

7. Câble d'alimentation sous-marin selon l'une quelconque des revendications précédentes, dans lequel la première extrémité de conducteur (33) et la seconde extrémité de conducteur (33') présentent des diamètres différents et la virole de compression (110) est asymétrique avec des diamètres d'ouverture différents (a) au niveau de côtés opposés avant la compression.

8. Câble d'alimentation sous-marin selon l'une quelconque des revendications précédentes, dans lequel la virole de compression comprend quatre ou six zones de compression (20) qui ont été comprimées respectivement sur la première extrémité de conducteur (33) et la seconde extrémité de conducteur (33').

9. Câble d'alimentation sous-marin selon l'une quelconque des revendications précédentes, dans lequel une ou plusieurs des zones de compression (20) qui ont été comprimées présentent une circonférence radiale de forme polygonale, de préférence une circonférence radiale de forme hexagonale ou octogonale.

10. Câble d'alimentation sous-marin selon l'une quelconque des revendications précédentes, dans lequel la virole de compression (10) avant la compression comprend une surface interne (14) munie d'ondulations telles que des filetages.

11. Câble d'alimentation sous-marin selon l'une quelconque des revendications précédentes, dans lequel la virole de compression (10) comprend une bride interne (12) à proximité du centre longitudinal de la virole.

12. Câble d'alimentation sous-marin selon l'une quelconque des revendications précédentes, dans lequel la virole de compression (10) est constituée de cuivre ou d'un alliage de cuivre.

13. Procédé de fourniture d'un joint sur un câble d'alimentation sous-marin dans lequel une première extrémité de conducteur (33) comprenant un premier élément de tension (35) est électriquement et mécaniquement raccordée à une seconde extrémité de conducteur (33') dotée d'un second élément de tension (35'), comprenant
- le retrait de toute couche semi-conductrice ou isolante d'une section d'extrémité de la première extrémité de conducteur et de la seconde extrémité de conducteur
- la fourniture d'une virole de compression (10) dotée d'une ouverture longitudinale, dans lequel la virole de compression comprend au moins deux zones de compression (20)
- l'insertion de la première extrémité de conducteur (33) et de la seconde extrémité de conducteur (33') dans l'ouverture de la virole de compression à partir de côtés opposés
- la compression de la virole de compression sur la première extrémité de conducteur (33) et la seconde extrémité de conducteur (33') dans les au moins deux zones de compression, de sorte que la première extrémité de conducteur (33) et la seconde extrémité de conducteur (33') soient électriquement et mécaniquement raccordées ;
- le joint comprenant la virole comprimée est enfermé dans une couche semi-conductrice interne, enfermé dans une couche isolante, puis enfermé dans une couche semi-conductrice externe.

14. Procédé selon la revendication 13, dans lequel :
le retrait de toute couche semi-conductrice ou isolante d'une section d'extrémité de la première extrémité de conducteur comprend le retrait de toute couche semi-conductrice ou isolante sur une longueur s'étendant sur la longueur de l'ouverture,
dans lequel l'insertion de la première extrémité de conducteur (33) et de la seconde extrémité de conducteur (33') dans l'ouverture de la virole de compression à partir de côtés opposés comprend :
- l'agencement de la virole de compression entourant la longueur de la première extrémité de conducteur
- le raccordement du premier élément de tension (35) au second élément de tension (35') par soudage ou par compression des éléments de tension, ou la fixation d'une seconde virole de compression au premier élément de tension (35) et au second élément de tension (35'), et
- le coulissement de la virole de compression vers la seconde extrémité de conducteur et sur celle-ci.
